(19) Europäisches Patentamt
European Patent Office
Office européen des brevets

(11) EP 1 354 927 B1

(12) **EUROPÄISCHE PATENTSCHRIFT**

(45) Veröffentlichungstag und Bekanntmachung des Hinweises auf die Patenterteilung:
**25.07.2012 Patentblatt 2012/30**

(51) Int Cl.:
***C09J 133/04*** *(2006.01)* ***C09J 151/00*** *(2006.01)*

(21) Anmeldenummer: **03006428.1**

(22) Anmeldetag: **21.03.2003**

(54) **Verfahren zur Herstellung von Hotmelt-Polyacrylat-Haftklebemasse sowie deren Verwendung**

Process for the preparation of hotmelt polyacrylate adhesives and their use

Procédé de préparation d' adhésifs thermofusibles et leur utilisation

(84) Benannte Vertragsstaaten:
**DE ES FR GB IT**

(30) Priorität: **16.04.2002 DE 10216680**

(43) Veröffentlichungstag der Anmeldung:
**22.10.2003 Patentblatt 2003/43**

(73) Patentinhaber: **TESA SE**
**20253 Hamburg (DE)**

(72) Erfinder:
- **Husemann, Marc, Dr.**
**D-22559 Hamburg (DE)**
- **Zöllner, Stephan, Dr.**
**D-21244 Buchholz/Nordheide (DE)**

(56) Entgegenhaltungen:
**EP-A- 0 315 072 WO-A-87/05315**
**US-A- 4 556 595**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 354 927 B1

## Beschreibung

Die Erfindung betrifft ein Verfahren zur Herstellung von Polyacrylat-Hotmelt-Haftklebemasse und deren Verwendung für die Beschichtung von Trägern zur Herstellung von Haftklebebändern verschiedenster Form, insbesondere für repositionierbare Haftklebebänder, geringhaftende Schutzfolien, doppelseitige Fixierbänder und dergleichen.

Für industrielle und für Konsumeranwendungen besteht ein kontinuierlicher Bedarf für repositionierbare Haftklebebänder oder im allgemeinen Haftklebebänder, die nach der Applikation auf das Substrat nicht aufziehen. Dies wird beispielsweise bei bestimmten doppelseitigen Verklebungen gewünscht.

Im Haushaltsbereich können Polysterverklebungen mit der Wand mit wiederabziehbaren Haftklebebändern angebracht werden. Für diese Anwendung werden nur relativ schwachklebende Haftklebemassen benötigt, die auch über einen längeren Zeitraum keine höheren Klebkräfte mit dem Substrat aufbauen sollten, um Schädigungen der Wand (Tapete) zu vermeiden. Im industriellen Bereich werden z.B. in der Druckindustrie doppelseitige Klebebänder zur Verklebung von flexiblen Druckplatten auf Stahlrollen (Flexo-Druck) eingesetzt. Hier will der Drucker im Notfall repositionieren oder nach abgeschlossener Anwendung die Druckplatte samt Fix wieder leicht entfernen können, da sonst ein aufwendiger Prozess anfällt, die Stahlrolle mit Lösemitteln von den Klebemasseresten zu reinigen.

Auch Schutzfolienverklebungen sind ein weiteres klassisches Beispiel für Haftklebebänder mit geringer und konstanter Klebkraft über einen längeren Zeitraum. Die Schutzfolie sollte auch nach der Applikation auf dem Substrat noch leicht und ohne Schädigung zu entfernen sein. Auch hier sind Haftklebemassenreste unerwünscht und zu vermeiden.

Auf Grund ökonomischer und ökologische Überlegungen geht allgemein der Trend zur Herstellung von Haftklebebändern aller Art zum Hotmeltverfahren, da in diesem Prozess Lösemittel weitgehend ausgeschlossen wird. Weiterhin wird die Produktionszeit durch schnellere Beschichtungsgeschwindigkeiten verkürzt.

Um den Bedarf an Witterungs- und Temperatur- sowie Oxidationsstabilen Haftklebemassen zu decken, werden sehr häufig Acrylathaftklebemassen eingesetzt. Diese sind in den meisten Fällen vollkommen gesättigt und sind daher inert gegen die Oxidation oder Weiterreaktion der Doppelbindungen.

Acrylathotmeltanwendungen sind bereits bekannt und vor langer Zeit beschrieben worden (Dutch Pat. 6 606 711 und 7 009 629). Um nun die Klebkräfte auf polaren Substraten, wie Stahl herabzusetzen, ist es im Stand der Technik bekannt, unpolare Harze hinzuzugeben. Ein unerwünschter Nebeneffekt dieser Methode ist häufig die Migration dieser nicht verträglichen Harze innerhalb der Haftklebemasse.

Neuere Methoden verwenden Mikropartikel in den Haftklebemassen. Aus US 5,441, 810 ist der Einsatz in der Hitze ausdehnbarer Mikropartikel bekannt; diese dehnen sich nach Temperatureinwirkung aus und erlauben so eine leichtere Entfernung vom Substrat. Nachteilig ist, dass vor dem Entfernen der Haftklebemasse eine Temperaturerhöhung benötigt wird.

Auch klebrige Mikropartikel sind für Haftklebeanwendungen bereits eingesetzt worden, wie u.a. aus US 4,810,763 bekannt. In Verbindung mit einem Hotmelt-Verfahren sind klebrige Partikel in US 4,049,483 offenbart.

US 4,735,837 offenbart die Verwendung elastischer Mikrobälle oder Mikrohohlkugeln für repositionierbare Haftklebeflächen, wobei eine dünne Schicht eines stark haftenden Klebstoffs mit hohem Tack auf einer durch die herausragenden Teile der Mikrokugeln stark strukturierten Oberfläche gebildet wird. Zur Erzeugung dieses Effekts ist ein hoher Anteil elastischer Mikrobälle erforderlich. Dieser hohe Anteil an Mikrokugeln beeinflusst die Verarbeitungseigenschaften der Masse sehr stark, so dass die aus US 4,735,837 bekannte Masse mit hohem Kugelanteil für das Hotmelt-Verfahren nicht geeignet ist. Im konventionellen Lösemittelbeschichtungsprozess werden durch das Abdampfen des Lösemittels die Mikropartikel zur Oberfläche getragen, so daß Haftklebemasse an der Oberfläche stark abstumpft und keine Klebrigkeit mehr besitzt.

EP 0 315 072 A2 beschreibt eine Schicht einer Haftklebemasse, die auf mindestens einer Oberfläche eine Schicht gleichmäßig verteilter, nicht-klebriger fester Partikel mit einem durchschnittlichen Durchmesser von 10 bis 60 $\mu$m aufweist. Dabei steht mindestens die Hälfte aller Partikel zu einer Höhe von mindestens einem Viertel des durchschnittlichen Teilchendurchmessers aus der Oberfläche heraus. Eine derartige Haftklebmasse weist eine sehr niedrige Anfangsklebkraft auf, entwickelt aber nach dem Anpressen schnell eine hohe finale Klebkraft.

Eine ähnliche Haftklebemasse, die sich durch Repositionierbarkeit des verklebten Substrats auszeichnet, wird in US 4,556,595 beschrieben. Hier weisen die nicht-klebrigen Partikel einen Durchmesser auf, der kleiner als die Dicke der Klebeschicht und durchschnittlich kleiner als 10 $\mu$m ist. Die nicht-klebrigen Teilchen sind gleichmäßig über die Oberfläche der Haftklebeschicht verteilt oder zum Teil beziehungsweise vollständig in die Oberflächenschicht der Klebeschicht eingebettet.

Der Erfindung liegt daher das Problem zugrunde, eine schwach aber dauerhaft klebende Polyacrylat-Haftklebemasse zur Verfügung zu stellen, die ein geringes oder gar kein Aufziehverhalten selbst auf unterschiedlichen Substraten zeigt und gleichzeitig ein Verfahren zur Herstellung einer solchen Haftklebemasse zur Verfügung zu stellen, bei welchem die Schwerfestigkeit des Haftschmelzklebers nicht wesentlich beeinträchtigt wird.

Zur Lösung dieses Problems ist erfindungsgemäß eine Polyacrylat-Haftklebemasse gemäβ Ansprüche 1-6

vorgesehen, die einen Gehalt an nicht-klebrigen Partikeln mit einem mittleren Durchmesser von 2 - 10 μm in einem Gewichtsanteil von bis zu 15 %, bevorzugt bis zu 10%, weiter bevorzugt bis zu 8 %, bezogen auf die Gesamtpolymermasse besitzt. Durch den Anteil nicht-klebriger Partikel zeigt die erfindungsgemäße Polyacrylat-Haftklebemasse kein oder ein nur geringes Aufziehverhalten.

Das erfindungsgemäße Verfahren zur Herstellung einer Poolyacrylat-Haftklebemasse mit geringem Aufziehverhalten zeichnet sich dadurch aus, dass eine radikalische Polymerisation eines Acrylsäure und/oder Methacrylsäure und/oder deren Derivate enthaltenden Monomerengemischs in Lösung im Beisein nicht-klebriger Partikel mit einem mittleren Durchmesser von 2 - 10 μm in einem Gewichtsanteil von bis zu 15 % bezogen auf die Masse des Monomerengemisches durchgeführt wird und das in Lösung befindliche Polymerisat mit den nicht-klebrigen Partikeln in einem Aufkonzentrations-extruder zu einer als Hotmelt verarbeitbaren Polyacrylat-Haftklebemasse aufkonzentriert wird.

Das erfindungsgemäße Verfahren ermöglicht die Herstellung einer homogenen Polyacrylat-Haftklebemasse mit geringem Aufziehverhalten. Die erfindungsgemäße Masse besitzt eine gute Scherfestigkeit und ist als Hotmelt verarbeitbar.

Bevorzugt wird die Masse zur Beschichtung von Trägern, insbesondere Folien und Folienstreifen im Hotmeltverfahren und zur Herstellung von Haftklebestreifen und -folien verwendet.

Die Hotmelt-Haftklebemasse kann als ein- oder doppelseitiger Film auf einen Träger aufgetragen werden. Hierdurch erhält man einseitig klebende Bänder oder Folien, z.B. leicht wiederentfernbare Schutzfolien, die keine Rückstände auf dem Untergrund hinterlassen, oder doppelseitige Bänder oder Folien, z.B. Fixierklebebänder für ein zeitweises Fixieren von Gegenständen auf einem Untergrund.

Die Erfindung umfasst demnach auch Haftklebefolien, welche auf einem Träger ein- oder beidseitig mit der Polyacrylat-Hotmelt-Haftklebemasse beschichtet sind, mit einem Gehalt an nicht-klebrigen Partikeln mit einem mittleren Durchmesser von 2 - 10 μm in einem Gewichtsanteil von bis zu 15 %. Die Form der Folien kann beliebig sein, z.B. blattförmig oder streifen- bzw. bandförmig. Insbesondere können die gerollten, beschichteten Folien abschließend zu Haftklebebandrollen geschnitten werden.

Als nicht-klebrige Partikel können vorteilhaft PMMA-Kugeln verwendet werden, die kommerziell erhältlich sind. Gut verwendbar sind z.B. Kugeln der Fa. Nippon Shokubai mit den Handelsbezeichnungen EPS-MA 1002®, EPS-MA 1004® und EPS-MA 1010®. Neben den kommerziell erhältlichen PMMA-Kugeln können aber auch konvetionelle über Emulsionsporlymerisation hergestellte PMMA-Kugeln verwendet werden. Diese werden vor dem Blending bevorzugt vom Lösemittel befreit. Weiterhin lassen sich auch in einer für die Erfindung besonders bevorzugten Auslegung vernetzte PMMA-Kugeln eingesetzen. Diese können - wie dem Fachmann bekannt - durch Zusatz von z.B. difunktionellen (Meth) acrylaten leicht quervernetzt werden. Eine weitere Methode zur Herstellung von PMMA-Partikeln stellt der Mahlprozess dar. Hier wird z.B. PMMA-Granulat nochmals deutlich zerkleinert und dann zur Einstellung der Teilchengröße entsprechend gesiebt.

Erstaunlicherweise wurde gefunden, dass bereits ein Verblenden mit nicht-klebrigen Partikeln in relativ geringem Gewichtsanteil wesentliche im Sinne der Aufgabe der Erfindung vorteilhafte Eigenschaften erbringt.

Die erfindungsgemäßen Acrylathaftklebemassen enthalten vorzugsweise ein Polymer bestehend aus

(A) 70 bis 99 Gew-% Acrylsäure und/oder Methacrylsäure und/oder deren Derivaten mit folgenden Einheiten

$$CH_2=CH(R_1)(COOR_2),$$

wobei $R_1$ gleich H oder $CH_3$ ist und $R_2$ eine Alkylkette mit 1- 20 C-Atomen ist; und

(B) 1 bis 30 Gew-% Vinylverbindungen mit funktionellen Gruppen, umfassend Maleinsäureanhydrid, Styrol, Styrol-Derivate, Vinylacetat, Acrylamide und/oder mit Doppelbindungen funktionalisierte Photoinitiatoren,

wobei die Gewichtsanteile der Polymerbestandteile sich zu 100 ergänzen.

Zur Polymerisation werden die Monomere dermaßen gewählt, daß die resultierenden Polymere bei Raumtemperatur oder höheren Temperaturen als Haftklebemassen eingesetzt werden können, insbesondere derart, daß die resultierenden Polymere haftklebende Eigenschaften entsprechend des "Handbook of Pressure Sensitive Adhesive Technology" von Donatas Satas (van Nostrand, New York 1989) besitzen.

Zur Erzielung einer bevorzugten Glasübergangstemperatur $T_G$ der Polymere von $T_G \leq 10$ °C werden entsprechend dem vorstehend gesagten die Monomere sehr bevorzugt derart ausgesucht und die mengenmäßige Zusammensetzung der Monomermischung vorteilhaft derart gewählt, daß sich nach der ***Fox***-Gleichung (G1) (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

In einer sehr bevorzugten Auslegung werden für Acryl- oder Methacrylmomonere (A) solche eingesetzt, die aus Acryl- und Methacrylsäureester mit Alkylgruppen aus 4 bis 14 C-Atomen bestehen, bevorzugt 4 bis 9 C-Atomen. Spezifische Beispiele, ohne sich durch diese Aufzählung einschränken zu wollen, sind Methlacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigte Isomere, wie z.B. Isobutylacrylat, 2-Ethylhexylacrylat, 2-Ethylhexylmethacrylat, Isooctylacrylat, Isooctylmethacrylat.
Weitere einzusetzende Verbindungsklassen sind monofunktionelle Acrylate bzw. Methacrylate von überbrückten Cycloalkylalkoholen, bestehend aus zumindestens 6 C-Atomen. Die Cycloalkylalkohole können auch substituiert sein, z.B. durch C1-6 Alkyl-, Halogen-, oder Cyano-Gruppen. Spezifische Beispiele sind Cyclohexylmethacrylate, Isobornylacrylat, Isobornylmethacrylate und 3,5-Dimethyladamantylacrylat.

In einer Ausführungsform werden für (B) Monomere eingesetzt, die polare Gruppe wie Carboxyl, Sulfon- und Phosphonsäure, Hydroxy-, Lactam und Lacton, N-substituiertes Amid, N-substituiertes Amin, Carbamat-, Epoxy-, Thiol-, Ether, Alkoxy-. Cyan- oder ähnliches tragen.

Moderat basische Monomere (B) sind z.B. N,N-Dialkyl substituierte Amide, wie z.B. N,N-Dimethylacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid , wobei diese Aufzählung nicht abschließend ist.

Weitere bevorzugte Beispiele für Monomere (B) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Gycerylmethacrylat, 6-Hydroxyhexylmethacrylat, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren sehr bevorzugten Auslegung werden als Monomere (B) Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

In einer weiteren bevorzugten Auslegung werden als Monomere (B) Verbindungen hinzugesetzt, die eine hohe statische Glasübergangstemperatur besitzen. Als Komponenten eigenen sich aromatische Vinylverbindungen, wie z.B. Styrol eingesetzt, wobei bevorzugt die aromatischen Kerne aus $C_4$ bis $C_{18}$ bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und methacrylat, 2-Naphthylacrylat und methacrylat sowie Mischungen aus denjenigen Monomeren, wobei diese Aufzählung nicht abschließend ist.

Weiterhin werden in einer weiteren bevorzugten Auslegung als Monomere (B) Photoinitiatoren mit einer copolymerisierbaren Doppelbindung eingesetzt. Als Photoinitiatoren sind Norrish I und II Photoinitiatoren geeignet. Beispiele sind z.B. Benzoinacrylat und ein acryliertes Benzophenon der Fa. UCB (Ebecryl P 36®). Diese Aufzählung ist nicht vollständig. Im Prinzip können alle dem Fachmann bekannten Photoinitiatoren copolymerisiert werden, die das Polymer über einen Radikalmechnismus unter UV-Bestrahlung vernetzen können. Ein Überblick über mögliche einsetzbare Photoinitiatoren die mit einer Doppelbindung funktionalisiert werden können, wird in Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London gegeben.

Zur Herstellung der Poly(meth)acrylathaftklebemassen werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Fa. DuPont) oder Azodisobutyronitril (AIBN) verwendet.

Die mittleren Molekulargewichte $M_W$ der bei der radikalischen Polymerisation entstehenden Haftklebemassen werden sehr bevorzugt derart gewählt, daß sie in einem Bereich von 200.000 bis 4.000.000 g/mol liegen; speziell für die weitere Verwendung als Schmelzhaftkleber werden Haftklebemassen mit mittleren Molekulargewichten $M_W$ von 600.000 bis 800.000 g/mol hergestellt. Die Bestimmung des mittleren Molekulargewichtes erfolgt über Größenausschlußchromatographie (GPC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z.B. Hexan, Heptan, Octan, Isooctan), aromatische Kohlenwasserstoffe (z.B. Benzol, Toluol, Xylol), Ester (z.B. Essigsäureethylester, Essigsäurepropyl-, -butyl- oder -hexylester), halogenierte Kohlenwasserstoffe (z.B. Chlorbenzol), Alkanole (z.B. Methanol, Ethanol, Ethylenglycol, Ethylenglycolmonomethylether) und Ether (z.B. Diethylether, Dibutylether) oder Gemische davon. Die wäßrigen Polymerisationsreaktionen können mit einem mit Wasser mischbaren oder hydrophilen Colösungsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Ein anderes vorteilhaftes Herstellungsverfahren für die Polyacrylathaftklebemassen ist die anionische Polymerisation. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird in diesem Fall im allgemeinen durch die Struktur $P_L$(A)-Me repräsentiert, wobei Me ein Metall der Gruppe I, wie z.B. Lithium, Natrium oder Kalium, und $P_L$(A) ein wachsender Polymerblock aus den Monomeren A ist. Die Molmasse des herzustellenden Polymers wird durch das Verhältnis von Initiatorkonzentration zu Monomerkonzentration kontrolliert. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, daß Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Zur Herstellung von Polyacrylathaftklebemassen mit einer engen Molekulargewichtsverteilung eignen sich auch kontrollierte radikalische Polymerisationsmethoden. Zur Polymerisation wird dann bevorzugt ein Kontrollreagenz der allgemeinen Formel eingesetzt:

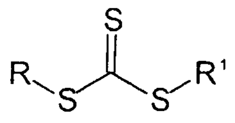

(I)

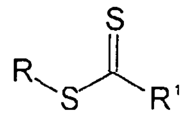

(II)

worin R und $R^1$ unabhängig voneinander gewählt oder gleich sind

- verzweigte und unverzweigte $C_1$- bis $C_{18}$-Alkylreste; $C_3$- bis $C_{18}$-Alkenylreste; $C_3$bis $C_{18}$-Alkinylreste;
- $C_1$- bis $C_{18}$-Alkxoyreste
- durch zumindest eine OH-Gruppe oder ein Halogenatom oder einen Silylether substituierte $C_1$- bis $C_{18}$-Alkylreste; $C_3$- bis $C_{18}$-Alkenylreste; $C_3$- bis $C_{18}$-Alkinylreste;
- $C_2$-$C_{18}$-Hetero-Alkylreste mit mindestens einem O-Atom und/oder einer NR*-Gruppe in der Kohlenstoffkette, wobei R* ein beliebiger (insbesondere organischer) Rest sein kann,
- mit zumindest einer Estergruppe, Amingruppe, Carbonatgruppe, Cyanogruppe, Isocyanogruppe und/oder Epoxidgruppe und/oder mit Schwefel substituierte $C_1$-$C_{18}$-Alkylreste, $C_3$-$C_{18}$-Alkenylreste, $C_3$-$C_{18}$-Alkinylreste;
- $C_3$-$C_{12}$-Cycloalkylreste
- $C_6$-$C_{18}$- Aryl- oder Benzylreste
- Wasserstoff

darstellen.

Kontrollreagenzien des Typs (I) bestehen bevorzugt aus folgenden weiter eingeschränkten Verbindungen:

Halogenatome sind hierbei bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.
Beispiele für Alkylreste, welche 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl.
Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.
Beispiele für Alkinyl mit 3 bis 18 Kohlenstoffatomen sind Propinyl, 2-Butinyl, 3-Butinyl, n-2-Octinyl und n-2-Octadecinyl.
Beispiele für Hydroxy-substituierte Alkylreste sind Hydroxypropyl, Hydroxybutyl oder Hydroxyhexyl.
Beispiele für Halogen-substituierte Alkylreste sind Dichlorobutyl, Monobromobutyl oder Trichlorohexyl.
Ein geeigneter $C_2$-$C_{18}$-Hetero-Alkylrest mit mindestens einem O-Atom in der Kohlenstoffkette ist beispielsweise $-CH_2-CH_2-O-CH_2-CH_3$.
Als $C_3$-$C_{12}$-Cycloalkylreste dienen beispielsweise Cyclopropyl, Cyclopentyl, Cyclohexyl oder Trimethylcyclohexyl.
Als $C_6$-$C_{18}$-Arylreste dienen beispielsweise Phenyl, Naphthyl, Benzyl, 4-tert.-Butylbenzyloder weitere substituierte Phenyl, wie z.B. Ethyl, Toluol, Xylol, Mesitylen, Isopropylbenzol, Dichlorobenzol oder Bromtoluol.
Die vorstehenden Auflistungen dienen nur als Beispiele für die jeweiligen Verbindungsgruppen und besitzen keinen Anspruch auf Vollständigkeit.

Weiterhin sind auch Verbindungen der folgenden Typen als Kontrollreagenzien einsetzbar

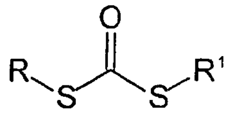
(III)

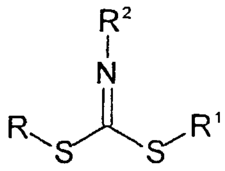
(IV)

wobei $R^2$ ebenfalls unabhängig von R und $R^1$ aus der oben aufgeführten Gruppe für diese Reste gewählt werden kann.

Beim konventionellen ‚RAFT-Prozeß' wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden. Um diesen Nachteil niedriger Umsätze zu umgehen, wird in einer besonders bevorzugten Vorgehensweise die Polymerisation mehrfach initiiert.

Als weitere kontrollierte radikalische Polymerisationsmethode können Nitroxid-gesteuerte Polymerisationen durchgeführt werden. Zur Radikalstabilisierung werden in günstiger Vorgehensweise Nitroxide des Typs (Va) oder (Vb) eingesetzt:

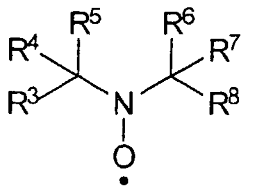
(Va)

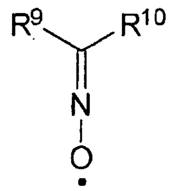
(Vb)

wobei $R^3$, $R^4$, $R^5$, $R^6$, $R^7$, $R^8$, $R^9$, $R^{10}$ unabhängig voneinander folgende Verbindungen oder Atome bedeuten:

i) Halogenide, wie z.B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester $-COOR^{11}$, Alkoxide $-OR^{12}$ und/oder Phosphonate $-PO(OR^{13})_2$,

wobei $R^{11}$, $R^{12}$ oder $R^{13}$ für Reste aus der Gruppe ii) stehen.

Verbindungen der (Va) oder (Vb) können auch an Polymerketten jeglicher Art gebunden sein (vorrangig in dem Sinne, daß zumindest einer der oben genannten Reste eine derartige Polymerkette darstellt).

Mehr bevorzugt werden kontrollierte Regler für die Polymerisation von Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxy pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid

- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode läßt sich in vorteilhafter Weise zur Synthese der Polyacrylathaftklebemassen die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Das Blending mit den PMMA-Kugeln erfolgt in einer für das Verfahren besonders bevorzugten Auslegung in Lösung oder bereits vor der Polymerisation mit den Monomeren. Der Fachmann kann hierbei üblichen Techniken zum Verblenden von Polymeren folgen.

Für das Herstellungsverfahren ist es erforderlich, das Lösemittel von der Haftklebemasse zu entfernen. Hier können im Prinzip alle dem Fachmann bekannten Verfahren eingesetzt werden. Ein sehr bevorzugtes Verfahren ist die Aufkonzentration über einen Einoder Doppelschneckenextruder. Der Doppelschneckenextruder kann gleich- oder gegenläufig betrieben werden. Das Lösemittel oder Wasser wird bevorzugt über mehrere Vakuumstufen abdestilliert. Zudem wird je nach Destillationstemperatur des Lösemittels gegengeheizt. Die Restlösemittelanteile betragen bevorzugt < 1 %, mehr bevorzugt < 0.5 % und sehr bevorzugt < 0.2 %. Der Hotmelt wird aus der Schmelze weiterverarbeitet. Die Aufkonzentration findet in einer sehr bevorzugten Ausgestaltung des Verfahrens in Gegenwart des PMMA-Partikelzusatzes statt.

In einer weiteren Auslegung des erfinderischen Verfahrens wird der PMMA-Kugelzusatz als Feststoff zum Schmelzhaftkleber zudosiert. Die Durchmischung und Homogenisierung der PMMA-Kugeln im Schmelzhaftkleber kann wiederum in einem Extruder geschehen.

Die Haftklebemasse kann zusätzlich wenigstens einen Polymervernetzer enthalten, vorzugsweise ausgewählt aus der Gruppe multifunktioneller Acrylate, Isocyanate oder Epoxide. Die Zugabe der Vernetzers ist optional und richtet sich nach dem genauen Verwendungszweck. Zur Herstellung von Klebebändern werden die Vernetzer beispielsweise optional nach der Polymerisation der Acrylatmasse, vor Auftragen auf einen Träger zugesetzt. Geeignete Vernetzer sind im Stand der Technik grundsätzlich bekannt. Als Vernetzer sind z.B. SR 610, PETIA, PETA, Ebecryl 11 und andere dem Fachmann geläufige multifunktionelle Acrylate und Isocyanate und Epoxide einsetzbar.

In Weiterbildung der Erfindung können den Polyacrylathaftklebemassen Harze beigemischt sein. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Bevorzugt enthält die erfindungsgemäße Polyacrylat-Haftklebemasse zusätzlich wenigstens ein Polyacrylat-Kompatibles Harz.

Weiterhin können auch Weichmacher, verschiedene Füllstoffe und Alterungsschutzmittel z.B. in Form von primären und sekundären Antioxidantien oder in Form von Lichtschutzmitteln zugesetzt sein.

Für die Vernetzung mit UV-Licht können den Polyacrylathaftklebemassen UV-absorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte □-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

Die Erfindung umfasst weiterhin die Verwendung der vorstehend beschriebenen Polyacrylat-Hotmeltmasse für die Beschichtung verschiedenster Träger, insbesondere von Folien und Folienstreifen im Hotmeltverfahren zur Herstellung von Haftklebeartikeln. Die Haftklebemasse kann dabei als ein- oder doppelseitiger Film auf einen Träger aufgetragen werden, so dass einseitig oder doppelseitig haftklebende Folien, Bänder und dergleichen erhalten werden. Bevorzugte Verwendungen umfassen einseitig klebende Schutzfolien und doppelseitige Fixierklebebänder.

Die abgemischten Acrylathaftklebemassen können in üblicher Weise als Hotmelt auf einen Träger (BOPP, PET, Vlies, PVC, Schaum) oder Trennpapier (Glassine, HDPE, LDPE) aufgetragen und anschließend zur Kohäsionssteigerung vernetzt werden. Die Klebemassen können thermisch, mit UV-Licht oder mit ionisierender Strahlung vernetzt werden.

Zur UV-Vernetzung wird mittels kurzzeitiger ultravioletter Bestrahlung in einem Wellenlängenbereich von 200 bis 400 nm, je nach verwendetem UV-Photoinitiator. bestrahlt, insbesondere unter Verwendung von Quecksilber-Hochdruck- oder -Mitteldruck-Lampen bei einer Leistung von 80 bis 240 W/cm. Die Bestrahlungsintensität wird der jeweiligen Quantenausbeute des UV-Photoinitiators und den einzustellenden Vernetzungsgrades angepasst.

Weiterhin ist es möglich die Polyacrylathaftklebemasse mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

Die auf diese Weise hergestellten Haftklebebänder lassen sich in einem Hotmelt-Prozess inklusive der Düsenbeschichtung herstellen, zeigen ein geringeres oder gar kein Aufziehverhalten auf verschiedenen Substraten und zeigen bei nicht zu geringen Konzentrationen an PMMA-Kugeln ab 3 Gew.-%, vorzugsweise ab 5 Gew.-%, eine deutlich bessere Schneidbarkeit.

Überraschenderweise konnte festgestellt werden, dass die Fließviskosität des Hotmelt-Prozesses durch Zusatz der Partikel praktisch nicht beeinflusst wird, so dass die übliche Hotmelt-Verarbeitung und Beschichtung unverändert beibehalten werden kann. Experimentell wurde eine Veränderung der Fließviskosität durch das Verblenden mit nichtklebrigen Partikeln gefunden, die immer geringer als 5 % verglichen mit der Fließviskosität des ursprünglichen Polyacrylates war.

Die Klebkräfte auf unterschiedlichen Substraten nehmen dagegen durch die Additivierung mit den Partikeln ab, wobei das Niveau der Klebkraft durch den Mengenanteil der PMMA-Kugeln eingestellt werden kann. Ferner wird die Schneidbarkeit von hochtackigen Haftklebemassen durch diesen Prozess verbessert.

Mit nach diesem Verfahren hergestellten Hotmelt-Haftmassen beschichtete Haftklebebänder besitzen kein oder ein deutlich reduziertes Aufziehverhalten.

Im folgenden wird die Erfindung anhand von Beispielen näher dargestellt und illustriert. Es werden dabei jeweils Beispiele gemäß der Erfindung mit Vergleichsbeispielen ohne nicht-klebende Partikel verglichen.

***Experimente***

Folgende Testmethoden wurden angewendet um die klebtechnischen Eigenschaften der hergestellten Haftklebemassen zu evaluieren.

*Testmethoden*

Scherfestigkeit (Test A)

Ein 13 mm breiter Streifen des Klebebandes wurde, nachdem auf Aluminiumfolie umkaschiert wurde, auf eine glatte Stahloberfläche, die dreimal mit Aceton und einmal mit Isopropanol gereinigt wurde, aufgebracht. Die Auftragsfläche betrug 20*13 mm (Länge*Breite). Anschließend wurde mit 2 kg Anpreßdruck das Klebeband viermal auf den Stahlträger gedrückt. Bei Raumtemperatur wurde ein 1 kg Gewicht an dem Klebeband befestigt. Die gemessenen Scherstandzeiten sind in Minuten angegeben und entsprechen dem Mittelwert aus drei Messungen.

180° Klebkrafttest (Test B)

Ein 20 mm breiter Streifen einer auf einer Polyester gecoateten Acrylat-haftklebemasse wurde auf Stahl Platten aufgebracht. Der Haftklebestreifen wurde zweimal mit einem 2 kg Gewicht auf das Substrat aufgedrückt. Das Klebeband wurde anschließend sofort mit 300 mm/min und im 180° Winkel vom Substrat abgezogen. Die Stahl Platten wurden zweimal mit Aceton und einmal mit Isopropanol gewaschen. Für die Messungen auf dem PE-Substrat wurden nur neue Platten verwendet. Die Meßergebnisse sind in N/cm angegeben und sind gemittelt aus drei Messungen. Alle Messungen wurden bei Raumtemperatur unter klimatisierten Bedingungen durchgeführt. Für die 72 h Werte wurde analog vorgegangen, nur mit dem Unterschied, dass das Haftklebeband unter klimatisierten Bedingungen 72 h auf dem Substrat (Stahl oder PE) belassen wurde.

Rheologie (Test C)

Die Messungen wurden mit dem Gerät Dynamic Stress Rheometer von Rheometrics durchgeführt. Bei 130°C wurde der Frequenzsweep von 0.1 bis 100 rad/s abgefahren. Alle Experimente wurden mit paralleler Plattenanordnung durchgeführt.

Gelpermeationschromatographie GPC (Test D)

Die Bestimmung des mittleren Molekulargewichtes $M_W$ und der Polydisperistät PD erfolgte über die Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 μ, $10^3$ Å, ID 8,0 mm x 50 mm verwendet. Zur Auftrennung wurden die Säulen PSS-SDV, 5 μ, $10^3$ sowie $10^5$ und $10^6$ mit jeweils ID 8,0 mm x 300 mm eingesetzt. Die Probenkonzentration betrug 4 g/l, die Durchflußmenge 1,0 ml pro Minute. Es wurde gegen PMMA-Standards gemessen.

**Herstellung der Proben**

Beispiel 1

Ein für radikalische Polymerisationen konventioneller 2 L-Glasreaktor wurde mit 8 g Acrylsäure, 4 g MSA, 194 g n-Butylacrylat, 194 g 2-Ethylhexylacrylat, und 300 g Aceton/Isopropanol (97:3) befüllt. Nach 45 Minuten Durchleiten mit Stickstoffgas unter Rühren wurde der Reaktor auf 58°C hochgeheizt und 0.2 g Vazo67® (Fa. DuPont) hinzugegeben. Anschließend wurde das äußere Heizbad auf 75°C erwärmt und die Reaktion konstant bei dieser Außentemperatur durchgeführt. Nach 1 h Reaktionszeit wurde wiederum 0.2 g Vazo 67 hinzugegeben. Nach 3 und 6 h wurde mit jeweils 150 g Aceton/Isopropanol Gemisch verdünnt. Zur Reduktion der Restinitiatoren wurden nach 8 und nach 10 h jeweils 0.4 g Perkadox 16® (Fa. Akzo Nobel) hinzugegeben. Die Reaktion wurde nach 22 h Reaktionszeit abgebrochen und auf Raumtemperatur abgekühlt. Die Klebemasse wurden dann vom Lösungsmittel befreit und als Hotmelt durch eine Düse auf PET (23 μm, mit Fluko-Primer) beschichtet.
Die Haftklebemassen wurde mit 30kGy ESH vernetzt und nach den Testmethoden A und B ausgetestet. Zur Rheologie (Testmethode C) wurde eine unvernetzte ungefähr 1 mm dicke Probe vorbereitet. Von dem Polyacrylat in Lösung wurde ein GPC aufgenommen und somit die Molekulargewichtsverteilung bestimmt.

Beispiel 2

Es wurde analog Beispiel 1 vorgegangen. Zur Polymerisation wurden 28 g Acrylsäure, 60 g Methylacrylat und 312 g 2-Ethylhexylacrylat eingesetzt. Die Lösungsmittel- und Initiatormengen wurden beibehalten. Zur Härtung wurde

das reine Polyacrylat auf dem Polyester-Träger mit 30 kGy Dosis behandelt. Zur Analyse wurden die Testmethoden A und B durchgeführt. Zur Rheologie (Testmethode C) wurde eine unvernetzte ungefähr 1 mm dicke Probe vorbereitet.

Beispiel 3

Es wurde analog Beispiel 1 vorgegangen. Zur Polymerisation wurden 40 g Acrylsäure, und 360 g 2-Ethylhexylacrylat eingesetzt. Die Lösungsmittel- und Initiatormengen wurden beibehalten. Das Polymer wurde und auf dem Polyester- Träger als Hotmelt mit 20 kGy Dosis ES-gehärtet. Zur Analyse wurden die Testmethoden A und B durchgeführt.

Beispiel 4

Es wurde analog Beispiel 1 vorgegangen. Zur Polymerisation wurden 8 g Acrylsäure, 348 g 2-Ethylhexylacrylat, 40 g Methylacrylat und 4 g MSA eingesetzt. Die Lösungsmittel- und Initiatormengen wurden beibehalten. Das Polymer wurde und auf dem Polyester- Träger als Hotmelt mit 50 kGy Dosis ES-gehärtet. Zur Analyse wurden die Testmethoden A und B durchgeführt.

Beispiel 1Harz

Das Polymer aus Beispiel 1 wurde mit 0.5 Gewichtsanteilen SR 610® (Sartomer, Fa. Cray Valley) und 20 Gewichtsanteilen Norsolen M1080® (Fa. Cray Valley) abgemischt und auf dem Polyester-Träger als Hotmelt mit 50 kGy Dosis ES-gehärtet. Zur Analyse wurden die Testmethoden A und B durchgeführt.

***Herstellung der PMMA-Kugel Blends***

Als PMMA Kugeln wurden die Micro-Partikel der Fa. Nippon Shokubai eingesetzt. Die Produktnamen: EPS-MA 1002® (2μm ∅); EPS-MA 1004® (4μm ∅); EPS-MA 1010® (10μm ∅).

Beispiel 1II

100 g (bezogen auf den Feststoffanteil) des Polymers in Lösung aus Beispiel 1 wurden mit 6 g PMMA-Kugeln EPS-MA 1002® unter starkem Rühren abgemischt. Nach dem Entfernen des Lösemittels in Trockenschrank bei 120°C wurde der Hotmelt. Der Schmelzhaftkleber wurde dann über eine Pröls-Schmelzdüse beschichtet. Die Beschichtungstemperatur betrug 150°C. Es wurde mit 20 m/min auf eine PET-Folie beschichtet. Die Düsenspaltbreite betrug 200 μm. Nach der Beschichtung betrug der Masseauftrag der Haftklebemasse auf dem Trennpapier 50 g/m$^2$. Zur Beschichtung wurde ein Druck von 6 bar auf die Schmelzdüse angelegt, damit die Schmelzhaftklebemasse durch die Düse gedrückt werden konnte.
Die Haftklebemassen wurde mit 30 kGy ESH vernetzt und nach den Testmethoden A und B ausgetestet.

Beispiel 1II (*in situ*)

Es wurde analog Beispiel 1 vorgegangen. Zur Polymerisation wurden 8 g Acrylsäure, 4 g MSA, 194 g n-Butylacrylat, 194 g 2-Ethylhexylacrylat, 24 g PMMA-Kugeln EPS-MA 1002® und 300 g Aceton/Isopropanol (97:3) eingesetzt. Nach dem Entfernen des Lösemittels in Trockenschrank bei 120°C wurde der Hotmelt weiterverarbeitet. Der Schmelzhaftkleber wurde über eine Pröls-Schmelzdüse beschichtet. Die Beschichtungstemperatur betrug 150°C. Es wurde mit 20 m/min auf eine PET-Folie beschichtet. Die Düsenspaltbreite betrug 200 μm. Nach der Beschichtung betrug der Masseauftrag der Haftklebemasse auf dem Trennpapier 50 g/m$^2$. Zur Beschichtung wurde ein Druck von 6 bar auf die Schmelzdüse angelegt, damit die Schmelzhaftklebemasse durch die Düse gedrückt werden konnte.
Die Haftklebemassen wurde mit 30 kGy ESH vernetzt und nach den Testmethoden A und B ausgetestet. Das Polyacrylat wurde für die GPC filtriert und dann die Molekulargewichtsverteilung bestimmt.

Beispiel 1IV

100 g (bezogen auf den Feststoffanteil) des Polymers in Lösung aus Beispiel 1 wurden mit 6 g PMMA-Kugeln EPS-MA 1004® unter starkem Rühren abgemischt. Nach dem Entfernen des Lösemittels wurde analog Beispiel 111 vorgegangen.
Die Haftklebemassen wurde mit 30 kGy ESH vernetzt und nach den Testmethoden A und B ausgetestet. Zur Rheologie (Testmethode C) wurde eine unvernetzte ungefähr 1 mm dicke Probe vorbereitet.

Beispiel 1IV (*in situ*)

Es wurde analog Beispiel 1 vorgegangen. Zur Polymerisation wurden 8 g Acrylsäure, 4 g MSA, 194 g n-Butylacrylat, 194 g 2-Ethylhexylacrylat, 24 g PMMA-Kugeln EPS-MA 1004® und 300 g Aceton/Isopropanol (97:3) eingesetzt. Nach dem Entfernen des Lösemittels in Trockenschrank bei 120°C wurde der Schmelzhaftkleber als Hotmelt über eine Pröls-Schmelzdüse beschichtet. Die Beschichtungstemperatur betrug 150°C. Es wurde mit 20 m/min auf eine PET-Folie beschichtet. Die Düsenspaltbreite betrug 200 µm. Nach der Beschichtung betrug der Masseauftrag der Haftklebemasse auf dem Trennpapier 50 g/m$^2$. Zur Beschichtung wurde ein Druck von 6 bar auf die Schmelzdüse angelegt, damit die Schmelzhaftklebemasse durch die Düse gedrückt werden konnte.
Die Haftklebemassen wurde mit 30 kGy ESH vernetzt und nach den Testmethoden A und B ausgetestet. Das Polyacrylat wurde für die GPC filtriert und dann die Molekulargewichtsverteilung bestimmt.

Beispiel 1X

100 g (bezogen auf den Feststoffanteil) des Polymers in Lösung aus Beispiel 1 wurden mit 6 g PMMA-Kugeln EPS-MA 1010® unter starkem Rühren abgemischt. Nach dem Entfernen des Lösemittels wurde analog Beispiel 111 vorgegangen.
Die Haftklebemassen wurde mit 30 kGy ESH vernetzt und nach den Testmethoden A und B ausgetestet.

Beispiel 1%3

100 g (bezogen auf den Feststoffanteil) des Polymers in Lösung aus Beispiel 1 wurden mit 3 g PMMA-Kugeln EPS-MA 1004® unter starkem Rühren abgemischt. Nach dem Entfernen des Lösemittels wurde analog Beispiel 111 vorgegangen.
Die Haftklebemassen wurde mit 30 kGy ESH vernetzt und nach den Testmethoden A und B ausgetestet.

Beispiel 1%12

100 g (bezogen auf den Feststoffanteil) des Polymers in Lösung aus Beispiel 1 wurden mit 12 g PMMA-Kugeln EPS-MA 1004® unter starkem Rühren abgemischt. Nach dem Entfernen des Lösemittels wurde analog Beispiel 111 vorgegangen.
Die Haftklebemassen wurde mit 30 kGy ESH vernetzt und nach den Testmethoden A und B ausgetestet.

Beispiel 2IV

100 g (bezogen auf den Feststoffanteil) des Polymers in Lösung aus Beispiel 2 wurden mit 6 g PMMA-Kugeln EPS-MA 1004® unter starkem Rühren abgemischt. Nach dem Entfernen des Lösemittels wurde analog Beispiel 111 vorgegangen.
Die Haftklebemassen wurde mit 30 kGy ESH vernetzt und nach den Testmethoden A und B ausgetestet. Zur Rheologie (Testmethode C) wurde eine unvernetzte ungefähr 1 mm dicke Probe vorbereitet.

Beispiel 3IV

100 g (bezogen auf den Feststoffanteil) des Polymers in Lösung aus Beispiel 3 wurden mit 6 g PMMA-Kugeln EPS-MA 1004® unter starkem Rühren abgemischt. Nach dem Entfernen des Lösemittels wurde analog Beispiel 1II vorgegangen.
Die Haftklebemassen wurde mit 20 kGy ESH vernetzt und nach den Testmethoden A und B ausgetestet.

Beispiel 4IV

100 g (bezogen auf den Feststoffanteil) des Polymers in Lösung aus Beispiel 4 wurden mit 6 g PMMA-Kugeln EPS-MA 1004® unter starkem Rühren abgemischt. Nach dem Entfernen des Lösemittels wurde analog Beispiel 111 vorgegangen.
Die Haftklebemassen wurde mit 50 kGy ESH vernetzt und nach den Testmethoden A und B ausgetestet.

Beispiel 1Harz%12

100 g (bezogen auf den Feststoffanteil des Polymers und des Harzes aus Beispiel 1 Harz wurden mit 12 g

PMMA-Kugeln EPS-MA 1004® unter starkem Rühren abgemischt. Nach dem Entfernen des Lösemittels wurde analog Beispiel 1II vorgegangen. Die Haftklebemassen wurde mit 50 kGy ESH vernetzt und nach den Testmethoden A und B ausgetestet.

Ziel dieser Erfindung ist Herstellung von Acrylathotmelts mit geringem oder gar keinem Aufziehverhalten. Um den Effekt der PMMA-Kugeln nachzuweisen, wurden zunächst die reinen Polyacrylate ohne Zusatz hergestellt. Zu diesem Zweck wurden verschiedene Polyacrylate mit haftklebenden Eigenschaften konventionell im 2 L Glasreaktor oder im 200 L Stahlreaktor polymerisiert. Die entsprechenden Polymere sind in Tabelle 1 aufgelistet:

Tabelle 1: Polymere

| Tabelle 1 | | | | | |
|---|---|---|---|---|---|
| Beispiel | AS [%] | 2-EHA [%] | n-BuA [%] | MA [%] | MSA [%] |
| 1 | 2 | 48.5 | 48.5 | 0 | 1 |
| 2 | 7 | 78 | 0 | 15 | 0 |
| 3 | 10 | 90 | 0 | 0 | 0 |
| 4 | 2 | 87 | 0 | 10 | 1 |

Die Beispiele 1 und 4 enthalten geringe Anteile polarer Comonomere, wie Acrylsäure, und sind daher relativ weich. Dagegen sind die Beispiele 2 und 3 relativ polar und werden bevorzugt als scherfestere Produkte ohne hohe Klebkraft sowie ohne Harzabmischung eingesetzt.

Beispiel 1 wurde anschliessend optional mit 0.5 Gewichtsanteilen SR 610® (Vernetzer) und 20 Gewichtsanteilen Norsolene M1080® abgemischt (Tabelle 2).

Tabelle 2: Vergleichsbeispiel 1 Harz (Zusammensetzung)

| Tabelle 2 | | | |
|---|---|---|---|
| | | Gewichtsanteile | |
| Beispiel | Beispiel | SR610® | Norsolene M1080® |
| 1Harz | 1 | 0.5 | 20 |

Zur Überprüfung der klebtechnischen Daten der Beispiel 1, 1Harz, 2, 3 und 4 wurden die Klebemassen auf einem Standardpolyester-Träger mit 50 g/m$^2$ aufgetragen und zur Kohäsionssteigerung mit Elektronenstrahlen (ES) vernetzt. Zur Beurteilung des Aufziehverhaltens wurde die Klebkraftmessung im 180° herangezogen. Es wurde sowohl auf Stahl (polare Oberfläche) als auch auf PE (unpolare Oberfläche) getestet.

Gemessen wurde die Klebkraft sofort und nach 72 h. Zur Vervollständigung wurde ebenfalls die Kohäsion via der Scherstandmessung ermittelt. Die Ergebnisse der klebtechnischen Ausprüfung werden in Tabelle 3 zusammengefasst:

Tabelle 3: Testergebnisse (Vergleichsbeispiele)

| Tabelle 3 | | | | | | |
|---|---|---|---|---|---|---|
| Beispiel | ESH Dosis | KK-Stahl sofort [N/cm] | KK-Stahl 72 h [N/cm] | KK-PE sofort [N/cm] | KK-PE 72 h [N/cm] | SSZ RT 10 N [min] |
| 1 | 30 kGy | 4.6 | 6.9 | 1.9 | 2.7 | 7250 |
| 2 | 30 kGy | 3.9 | 7.2 | 0.7 | 2.0 | 10000+ |
| 3 | 20 kGy | 3.8 | 7.0 | 0.9 | 2.1 | 10000+ |
| 4 | 50 kGy | 4.5 | 7.3 | 1.8 | 2.6 | 8245 |
| 1Harz | 50 kGy | 5.8 | 6.7 | 2.5 | 3.8 | 10000+ |
| KK = Klebkraft<br>SSZ = Scherstandzeiten<br>RT = Raumtemperatur | | | | | | |

(fortgesetzt)

| Tabelle 3 | | | | | | |
|---|---|---|---|---|---|---|
| Beispiel | ESH Dosis | KK-Stahl sofort [N/cm] | KK-Stahl 72 h [N/cm] | KK-PE sofort [N/cm] | KK-PE 72 h [N/cm] | SSZ RT 10 N [min] |
| PE = Polyethylen | | | | | | |

Tabelle 3 kann man entnehmen, dass alle gezeigten Acrylathaftklebemassen ein Aufziehverhalten besitzen. In allen Fällen steigt die Klebkraft auf Stahl im Vergleich sofort nach der Applikation und nach 72 h drastisch an. Der Effekt ist etwas weniger ausgeprägt bei der Harzabgemischen Variante. Ein ähnliches Bild zeigt sich für die Verklebungen auf dem Substrat PE (Polyethylen). Da die Oberfläche sehr unpolar ist und Polyacrylate relativ polar sind, liegen hier die Klebkräfte auf einem bedeutend niedrigerem Niveau. Dennoch zeigt sich auch hier nach 72 h ein deutliches Auffliessverhalten und ein Ansteigen der Klebkräfte. Dieser Effekt tritt besonders stark bei den sehr harten und scherfesten Polyacrylaten 2 und 3 auf, da diese eine längere Zeit zum Auffliessen benötigen. Die höchsten Klebkräfte werden mit der Harzabgemischten Verbindung 1Harz erzielt. Die Scherfestigkeit ist in allen Fällen relativ hoch (bei Raumtemperatur), wobei nur die Polyacrylate 1 und 4 nicht die 10000 Minuten Grenze mit 1 kg Scherkraft erreichen.
Die Auswirkungen des PMMA Blendings werden nun im folgenden untersucht. Zunächst sollten verschiedene Blends mit unterschiedlichen Gewichtsanteilen an PMMA Kugeln hergestellt werden. Verwendet wurden die PMMA Kugeln der Fa. Nippon Shokubai EPS-MA 1002®, EPS-MA 1004® und EPS-MA 1010®. Die hergestellten Abmischungen sind in Tabelle 4 aufgelistet.

Tabelle 4: erfindungsgemäße Beispiele (Zusammensetzung)

| Tabelle 4 | | | |
|---|---|---|---|
| Beispiel | Beispiel Basis | Ø in µm PMMA-Kugeln | Gewichtsanteil PMMA-Kugeln |
| 1II | 1 | 2 | 6 % |
| 1IV | 1 | 4 | 6 % |
| 1X | 1 | 10 | 6 % |
| 1%3 | 1 | 4 | 3 % |
| 1%12 | 1 | 4 | 12 % |
| 2IV | 2 | 4 | 6 % |
| 3IV | 3 | 4 | 6 % |
| 4IV | 4 | 4 | 6 % |
| 1Harz%12 | 1Harz | 4 | 12% |

Die in Tabelle 4 aufgelisteten Beispiele (Blends) wurden konventionell in Lösung hergestellt. Die Blends sind alle trübe. Zum Vergleich wurden die Beispiele 1II und 1IV mit einer neuen Methodik hergestellt. Vor der Polymerisation legte man die Monomere, das Lösemittel und die entsprechenden Mengen PMMA Kugeln vor, rührt und inhibierte mit Stickstoffgas und startete in Analogie zum Beispiel 1 die Polymerisation. Nach 22 h Reaktionszeit wurden die Polymerisationen abgebrochen und die Polyacrylate im GPC untersucht, wobei das homogen verteilte PMMA vorher abfiltriert wurde. Die GPC Messungen zeigten keine Unterschiede im mittleren Molekulargewicht sowie in der Polydispersität des Materials im Vergleich zu der Polymerisation ohne PMMA. Somit beeinflussen die PMMA Kugeln nicht die Polymerisation (z.B. als Regler) und brauchen daher später nicht aufwendig zudosiert werden. Letzteres ist aber auch möglich einfach durch Zudosierung als Festoff mit anschließender Durchmischung im Compounder.
Weiterhin belegen die Beispiele, dass die PMMA-haltigen Kugeln aus der Schmelze beschichtet werden können und somit im Hotmelt-Prozess verarbeitet werden können. Die in Tabelle 4 aufgelisteten Versuche sollten zunächst den Einfluß der Größe der PMMA-Kugeln und deren Mengenanteil am Haftklebstoff untersuchen. Mit den restlichen Blends sollte gewährleistet werden, dass die Aussagen auch auf unterschiedliche Haftkleber zu übertragen sind.
Bevor die PMMA-Kugel-Blends klebtechnisch ausgeprüft wurden, führte man einige rheologische Untersuchungen exemplarisch zur Fliessviskosität durch. Die Fliessviskosität ist ein limitierender Faktor für den Hotmelt-Prozes und sollte durch die PMMA-Kugeln nicht ansteigen. Die Fliessviskosität wurde bei einer typischen Verarbeitungstemperatur von 130°C ermittelt.
In den Abbildungen 1 und 2 sind die Ergebnisse graphisch dargestellt; es zeigen:

Abbildung 1: die Fliessviskosität bei 130°C gemessen in einem Bereich zwischen 0.1 und 100 rad/s. Beispiele 1 und 1IV.

Abbildung 2: die Fliessviskosität bei 130°C gemessen in einem Bereich zwischen 0.1 und 100 rad/s. Beispiele 2 und 2IV.

Den Abbildungen 1 und 2 ist zu entnehmen, dass die Fliessvsikositäten nicht negativ durch die PMMA Kugeln beeinflußt werden. Vielmehr liegt die Fliessviskosität der mit PMMA Kugeln geblendeten Acrylathaftklebemassen etwas unterhalb der ursprünglichen Fliessviskosität. Somit beeinflusst das Blending mit PMMA Kugeln nicht die Hotmelt-Prozessfähigkeit. Probebeschichtungen durch die Hotmeltdüse zeigten weiterhin, dass sich die PMMA-Kugeln nicht koagulieren und Verklumpungen hervorrufen, die wiederum den Prozess stören könnten. Somit sind PMMA-Acrylathaftklebeblends vollständig Hotmeltfähig.

Die klebtechnischen Auswirkungen wurden anschliessend in Probebeschichtungen aus der Schmelze untersucht. Analog zu den Basispolymeren 1, 2, 3, 4, und 1 Harz wurde mit 50 g/m$^2$ beschichtet und auf dem Standard-Polyesterträger mit den identischen ESH Dosen zwecks Kohäsionssteigerung vernetzt. Die Ergebnisse der klebtechnischen Ausprüfungen sind in Tabelle 5 dargestellt.

Tabelle 5: Testergebnisse (erfindungsgemäße Beispiele)

| Tabelle 5 | | | | | | |
|---|---|---|---|---|---|---|
| Beispiel | ESH Dosis | KK-Stahl sofort [N/cm] | KK-Stahl 72 h [N/cm] | KK-PE Sofort [N/cm] | KK-PE 72 h [N/cm] | SSZ RT 10 N [min] |
| 1IM HAUSE / KST. | 30 kGy | 2.4 | 2.6 | 1.0 | 1.1 | 10000+ |
| 1IV | 30 kGy | 2.5 | 2.5 | 1.0 | 1.2 | 10000+ |
| 1X | 30 kGy | 2.5 | 2.7 | 0.9 | 1.0 | 10000+ |
| 1%3 | 30 kGy | 3.0 | 3.0 | 1.0 | 1.2 | 10000+ |
| 1%12 | 30 kGy | 2.1 | 2.1 | 0.5 | 0.5 | 10000+ |
| 2IV | 30 kGy | 2.5 | 2.7 | 0.6 | 0.7 | 10000+ |
| 3IV | 20 kGy | 2.6 | 2.4 | 0.7 | 0.7 | 10000+ |
| 4IV | 50 kGy | 2.9 | 3.0 | 0.8 | 1.0 | 10000+ |
| 1Harz%12 | 50 kGy | 4.7 | 4.9 | 1.9 | 2.0 | 10000+ |

Vergleicht man die Ergebnisse aus Tabelle 3 mit denjenigen aus Tabelle 5, so erkennt man, dass durch den Zusatz an PMMA-Kugeln die Klebkraft, sowohl auf Stahl als auch auf PE, deutlich abgesunken ist. Dafür ist in nahezu allen Fällen das Aufziehverhalten sehr gering oder gar nicht mehr vorhanden. Der Vergleich der Beispiele 1II, 1IV und 1X zeigt, dass die Grösse der PMMA-Kugeln bei gleichem Gewichtsanteil keinen grossen Einfluss besitzt. Die Klebkraftwerte für Stahl und PE liegen im Rahmen der Messfehler alle auf dem gleichen Niveau. Dagegen hat der Anteil schon einen etwas grösseren Einfluss. Vergleicht man 1IV mit 1%3 und 1%12, so kann man feststellen, dass mit steigender Menge PMMA-Kugeln die Klebkraft auf Stahl und PE absinkt. Das Aufziehverhalten ist in allen Fällen gering. Ein ähnliches Bild gibt sich für die Beispiele 2IV, 3IV und 4IV. Auch für die Harz-abgemischte Variante 1Harz%12 wurde eine verringerte Klebkraft auf Stahl und PE gemessen, wenn auch die Werte noch oberhalb der Polyacrylate ohne Harzzusatz liegen. Auch für 1Harz%12 wird ein nur sehr geringes Aufziehverhalten gemessen. Ein Vergleich der Scherstandzeiten liefert eine etwas gesteigerte Kohäsion für die Beispiele 1 und 4. Offensichtlich verteilen die PMMA Kugeln die inneren Spannungen in der Klebemasse während des Schertestes etwas besser und die Scherstandzeiten steigen an. Ein interessanter Nebenaspekt des PMMA-Kugel Zusatzes.

Weiterhin wurden verschiedene Haftklebebandmuster Messern geschnitten bzw. gestanzt. Hier wurde festgestellt, dass bei den PMMA-abgemischten Polyacrylaten nach dem Schnitt bedeutend weniger Haftklebemasse am Messer verbleibt, so dass der Prozess des Schneidens zu Haftklebebandrollen deutlich erleichtert wird.

Zusammenfassend bewirkt der PMMA-Kugel Zusatz zu den Polyacrylaten eine geringere Klebkraft auf Stahl und Polyethylen. Dennoch wird das sonst bei Polyacrylaten typische Aufziehverhalten deutlich verringert oder sogar eliminiert. Das selbe Ergebnis wurde für ein Polyacrylat-Harzgemisch gefunden. Neben Harzen können aber auch noch andere Zusätze, die üblich für Haftklebemassen sind, hinzugesetzt werden. Neben Weichmachern, Photoinitiatoren,

Füllstoffen sind z.B. auch Alterungsschutzmittel denkbar. Schneidversuche mit hochtackigen Polyacrylathaftklebemassen (hoher Harzanteil, Zusatz von Weichmachern) haben gezeigt, dass mit höherem Anteil PMMA-Kugeln (>6 %) sich die Klebemassen bedeutend besser schneiden lassen. Diese Klebemassen ziehen nicht so schnell am Messer auf, so dass sich das Schneidverhalten - besonders bei Messerstillstand mit anschließendem Anfahren - bedeutend verbessert; Ein weiterer positiver Aspekt der PMMA-Kugeln.

## Patentansprüche

1. Polyacrylat-Haftklebemasse mit geringem oder keinem Aufziehverhalten **gekennzeichnet durch** einen Gehalt an mit der Polyacrylat - Haftklebemasse verblendeten nicht-klebrigen Partikeln mit einem mittleren Durchmesser von 2 - 10 $\mu$m in einem Gewichtsanteil von bis zu 15 % bezogen auf die Gesamtpolymermasse.

2. Haftklebemasse nach Anspruch 1, **dadurch gekennzeichnet, dass** der Gewichtsanteil bis zu 10 % beträgt.

3. Haftklebemasse nach Anspruch 1 oder 2, **dadurch gekennzeichnet, dass** die nicht-klebrigen Partikel PMMA Kugeln sind.

4. Haftklebemasse nach einem der Ansprüche 1 bis 3, **dadurch gekennzeichnet, dass** die Haftklebemasse ein Polymer aus

   (A) 70 bis 99 Gew-% Acrylsäure und/oder Methacrylsäure und/oder deren Derivaten mit folgenden Einheiten

   $$CH_2=CH(R_1)(COOR_2)$$

   ,wobei R, gleich H oder $CH_3$ ist und $R_2$ eine Alkylkette mit 1 - 20 C-Atomen ist; und
   (B) 1 bis 30 Gew-% Vinylverbindungen mit funktionellen Gruppen, umfassend Maleinsäureanhydrid, Styrol, Styrol-Derivate, Vinylacetat, Acrylamide und/oder mit Doppelbindungen funktionalisierte Photoinitiatoren, enthält, wobei die Gewichtsanteile der Polymerbestandteile sich zu 100 ergänzen.

5. Haftklebemasse nach einem der Ansprüche 1 bis 4, **dadurch gekennzeichnet, dass** sie zusätzlich wenigstens einen Polymervernetzer enthält.

6. Haftklebemasse nach einem der Ansprüche 1 bis 5, **dadurch gekennzeichnet, dass** sie zusätzlich wenigstens ein Polyacrylat-kompatibles Harz enthält.

7. Verfahren zur Herstellung einer Polyacrylat-Haftklebemasse nach einem der Ansprüche 1 bis 6 durch radikalische Polymerisation eines Acrylsäure und/oder Methacrylsäure und/oder deren Derivate enthaltenden Monomerengemischs in Lösung, **dadurch gekennzeichnet, dass** die Polymerisation im Beisein nicht-klebriger Partikel mit einem mittleren Druchmesser von 2 - 10 $\mu$m in einem Gewichtsanteil von bis zu 15 % bezogen auf die Masse des Monomerengemisches durchgeführt wird und das in Lösung befindliche Polymerisat mit den nicht-klebrigen Partikeln in einem Aufkonzentrationsextruder zu einer Polyacrylat-Haftklebemasse aufkonzentriert wird.

8. Verwendung der Polyacrylatmasse nach einem der Ansprüche 1 bis 6 für die Beschichtung von Trägern im Hotmeltverfahren zur Herstellung von Haftklebestreifen und -folien.

9. Verwendung nach Anspruch 8, wobei die Haftklebemasse als ein- oder doppelseitiger Film auf einen Träger aufgetragen wird, insbesondere für einseitig klebende Schutzfolien und doppelseitige Fixierklebebänder.

10. Verwendung nach Anspruch 8 oder 9, wobei die Haftklebestreifen oder -folien nach dem Beschichten zu Haftklebebandrollen geschnitten werden.

11. Mit einer Polyacrylathaftklebemasse beschichtete Haftklebeartikel, welche einen Träger umfassen, der ein- oder beidseitig mit einer Polyacrylathaftklebemasse beschichtet ist, **gekennzeichnet durch** einen Gehalt an nicht-klebrigen Partikeln mit einem mittleren Durchmesser von 2 - 10 $\mu$m in einem Gewichtsanteil von bis zu 15 % in der Haftklebemasse.

## Claims

1. Pressure-sensitive polyacrylate adhesive composition having little or no peel increase, **characterized by** the presence of non-tacky particles which are blended with the pressure-sensitive polyacrylate adhesive composition, have an average diameter of 2 - 10 μm and are present in a weight fraction of up to 15% based on the total polymer composition.

2. Pressure-sensitive adhesive composition according to Claim 1, **characterized in that** the weight fraction is up to 10%.

3. Pressure-sensitive adhesive composition according to Claim 1 to 2, **characterized in that** the non-tacky particles are PMMA spheres.

4. Pressure-sensitive adhesive composition according to any of Claims 1 to 3, **characterized in that** the pressure-sensitive adhesive composition comprises a polymer of

   (A) 70% to 99% by weight of acrylic acid and/or methacrylic acid and/or derivatives thereof with the following units

   $$CH_2=CH(R_1)(COOR_2)$$

   where $R_1$ is H or $CH_3$ and $R_2$ is an alkyl chain having 1-20 C atoms; and
   (B) 1% to 30% by weight of vinyl compounds having functional groups, encompassing maleic anhydride, styrene, styrene derivatives, vinyl acetate, acrylamides and/or photoinitiators functionalized with double bonds, the weight fractions of the polymer constituents adding up to 100.

5. Pressure-sensitive adhesive composition according to any of Claims 1 to 4, **characterized in that** it further comprises at least one polymer crosslinker.

6. Pressure-sensitive adhesive composition according to any of Claims 1 to 5, **characterized in that** it further comprises at least one polyacrylate-compatible resin.

7. Method for producing a pressure-sensitive polyacrylate adhesive composition of any of Claims 1 to 6 by radical polymerization of a monomer mixture comprising acrylic acid and/or methacrylic acid and/or derivatives thereof in solution, **characterized in that** the polymerization is carried out in the presence of non-tacky particles having an average diameter of 2 - 10 μm in a weight fraction of up to 15% based on the mass of the monomer mixture, and the polymer present in solution is concentrated with the non-tacky particles in a concentrating extruder to give a pressure-sensitive polyacrylate adhesive composition.

8. Use of the polyacrylate composition according to any of Claims 1 to 6 for coating carriers in a hotmelt process for producing pressure-sensitive adhesive strips and pressure-sensitive adhesive sheets.

9. Use according to Claim 8, where the pressure-sensitive adhesive composition is applied as single-sided or double-sided film to a carrier, more particularly for single-sidedly adhesive protective sheets and double-sided adhesive fixing tapes.

10. Use according to Claim 8 or 9, where the pressure-sensitive adhesive strips or sheets are slit after coating to form pressure-sensitive adhesive tape rolls.

11. Pressure-sensitive adhesive articles coated with a pressure-sensitive polyacrylate adhesive composition and comprising a carrier coated on one or both sides with a pressure-sensitive polyacrylate adhesive composition, **characterized by** the presence in the pressure-sensitive adhesive composition of non-tacky particles having an average diameter of 2 - 10 μm in a weight fraction of up to 15%.

## Revendications

1. Masse autoadhésive à base de polyacrylate ne présentant pas ou seulement un faible comportement de prise, **caractérisée par** une teneur en particules non adhésives mélangées à la masse autoadhésive à base de polyacrylate présentant un diamètre moyen de 2-10 μm en une proportion pondérale allant jusqu'à 15% par rapport à la masse

totale du polymère.

2. Masse autoadhésive selon la revendication 1, **caractérisée en ce que** la proportion pondérale vaut jusqu'à 10%.

3. Masse autoadhésive selon la revendication 1 ou 2, **caractérisée en ce que** les particules non adhésives sont des billes de PMMA.

4. Masse autoadhésive selon l'une quelconque des revendications 1 à 3, **caractérisée en ce que** la masse autoadhésive contient un polymère de

(A) 70 à 99% en poids d'acide acrylique et/ou d'acide méthacrylique et/ou de leurs dérivés présentant les unités suivantes

$$CH_2=CH(R_1)(COOR_2)$$

$R_1$ représentant H ou $CH_3$ et $R_2$ représentant une chaîne alkyle comprenant 1-20 atomes de carbone ; et
(B) 1 à 30% en poids de composés de vinyle contenant des groupes fonctionnels, comprenant l'anhydride de l'acide maléique, le styrène, les dérivés du styrène, l'acétate de vinyle, les acrylamides et/ou des photo-initiateurs fonctionnalisés par des doubles liaisons, les proportions pondérales des constituants polymères se complétant à 100.

5. Masse autoadhésive selon l'une quelconque des revendications 1 à 4, **caractérisée en ce qu'**elle contient en outre au moins un réticulant polymère.

6. Masse autoadhésive selon l'une quelconque des revendications 1 à 5, **caractérisée en ce qu'**elle contient en outre au moins une résine compatible avec un polyacrylate.

7. Procédé pour la préparation d'une masse autoadhésive à base de polyacrylate selon l'une quelconque des revendications 1 à 6 par polymérisation radicalaire d'un mélange de monomères contenant de l'acide acrylique et/ou méthacrylique et/ou leurs dérivés en solution, **caractérisé en ce que** la polymérisation est réalisée en présence de particules non adhésives présentant un diamètre moyen de 2-10 μm dans une proportion pondérale allant jusqu'à 15% par rapport à la masse du mélange de monomères et le polymère se trouvant en solution avec les particules non adhésives est concentré dans une extrudeuse de concentration en une masse autoadhésive à base de polyacrylate.

8. Utilisation de la masse de polyacrylate selon l'une quelconque des revendications 1 à 6 pour le revêtement de supports dans un procédé par masse fondue à chaud pour la fabrication de bandes et de feuilles autoadhésives.

9. Utilisation selon la revendication 8, la masse autoadhésive étant appliquée sous forme de film simple ou double face sur un support, en particulier pour des feuilles de protection adhésives sur une face et des bandes adhésives de fixation double face.

10. Utilisation selon la revendication 8 ou 9, les bandes ou feuilles autoadhésives étant découpées après le revêtement en rouleaux de bande autoadhésive.

11. Objets autoadhésifs revêtus d'une masse autoadhésive à base de polyacrylate, comprenant un support qui est revêtu sur une ou deux faces d'une masse autoadhésive à base de polyacrylate, **caractérisés par** une teneur en particules non adhésives présentant un diamètre moyen de 2-10 μm en une proportion pondérale allant jusqu'à 15% dans la masse autoadhésive.

Abbildung 1

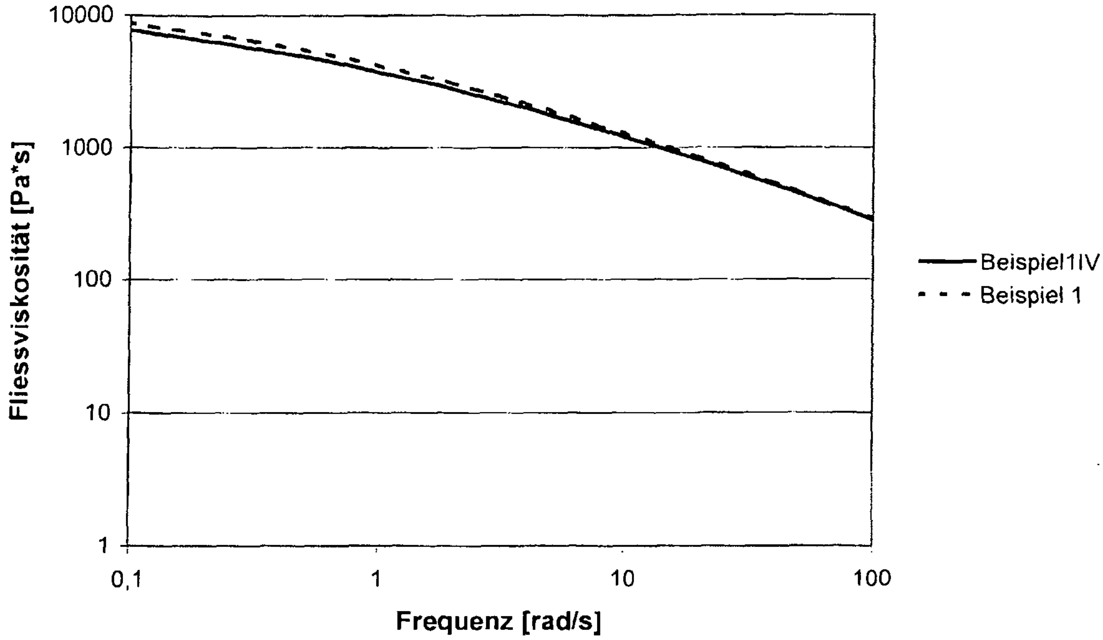


Abbildung 2

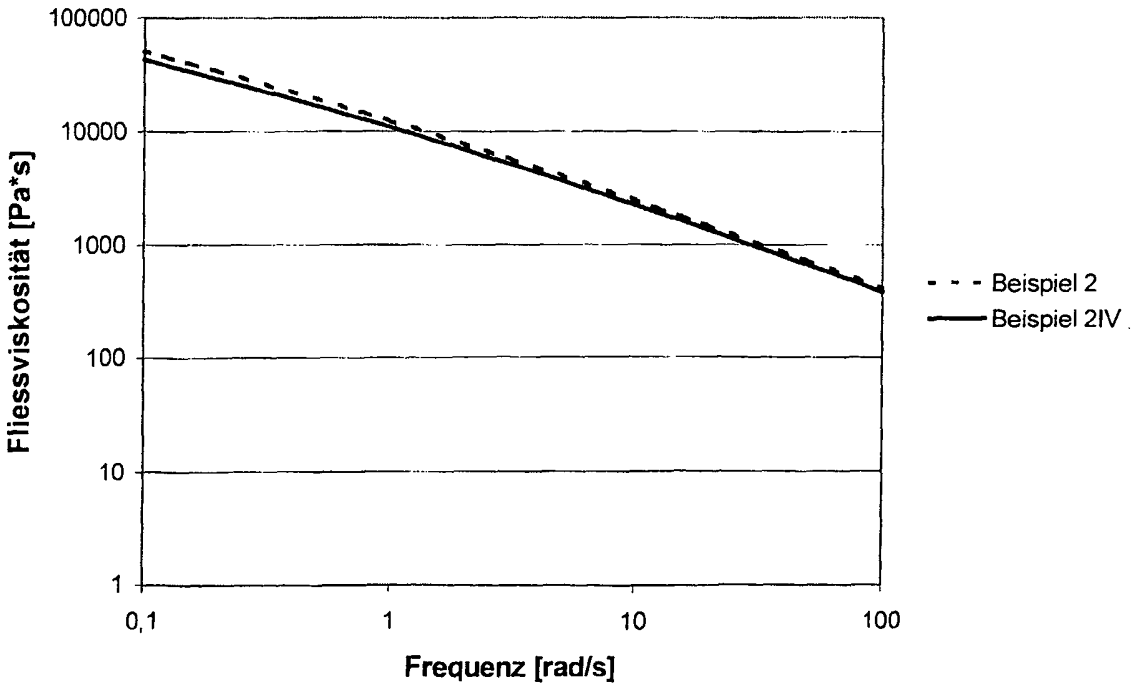

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- NL 6606711
- NL 7009629
- US 5441810 A
- US 4810763 A
- US 4049483 A
- US 4735837 A
- EP 0315072 A2
- US 4556595 A
- WO 9801478 A1
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A

### In der Beschreibung aufgeführte Nicht-Patentliteratur

- **DONATAS SATAS.** Handbook of Pressure Sensitive Adhesive Technology. 1989
- **T.G. FOX.** *Bull. Am. Phys. Soc.,* 1956, vol. 1, 123
- **FOUASSIER.** Photoinititation, Photopolymerization and Photocuring: Fundamentals and Applications. Hanser-Verlag, 1995
- **ERGÄNZEND KANN CARROY et al.** Chemistry and Technology of UV and EB Formulation for Coatings, Inks and Paints. SITA, 1994
- **HOUBEN WEYL.** Methoden der Organischen Chemie. vol. E 19a, 60-147
- *Macromolecules,* 1995, vol. 28, 7886
- **SKELHORNE.** Electron Beam Processing, in Chemistry and Technology of UV and EB formulation for Coatings, Inks and Paints. SITA, 1991, vol. 1